# EUROPEAN PATENT APPLICATION

(11) **EP 4 114 036 A1**
(43) Date of publication of application: **04.01.2023**
(21) Application number: 22180722.5
(22) Date of filing: 23.06.2022
(51) Int. Cl.: H04R 5/04, H04R 5/033, G06F 3/16, H04L 65/80, H04W 28/12, H04W 28/02

(54) **METHOD AND SYSTEM FOR TRANSMITTING AUDIO DATA WIRELESSLY**

(30) Priority: 28.06.2021 CN 202110720624
(71) Applicant: Telink Semiconductor (Shanghai) Co., LTD., Shanghai 201203 (CN)
(72) Inventor: ZHENG, Mingjian, SHANGHAI, 201203 (CN); JIN, Haipeng, SHANGHAI, 201203 (CN)
(74) Representative: Brann AB

(57) **Abstract**

The present disclosure provides a method and system for transmitting audio data wirelessly. The method comprises in each cycle of at least one cycle: sending, by an audio data sending device, an audio packet simultaneously to both a first audio playback device and a second audio playback device; and feeding back respective response messages to the audio data sending device by the first audio playback device and the second audio playback device in sequence in response to receiving the audio packet for playback. Thus, the audio data can be played at low latency according to the present disclosure.

## Description

### TECHNICAL FIELD

The present disclosure belongs to the field of electronic technologies, in particular to a method and system for transmitting audio data wirelessly.

### BACKGROUND

In a conventional audio data transmission approach for a binaural wireless headset, such as a binaural Bluetooth headset, audio packets are transmitted by an audio signal source such as a cell phone, a tablet or a personal computer to a primary Bluetooth earbud, which in turn parses the audio packets to obtain audio data required for a secondary Bluetooth earbud and transmits the audio data to the secondary Bluetooth earbud via short-range wireless communication, such that the secondary Bluetooth earbud subsequently plays the corresponding audio data. However, this audio data transmission approach suffers from a high signal latency.

### SUMMARY

An object of the present disclosure is to provide a method and system for transmitting audio data wirelessly to overcome the deficiencies of the prior art.

In order to solve the aforesaid problem, the present disclosure provides a method of transmitting audio data wirelessly, which includes in each cycle of at least one cycle:
sending, by an audio data sending device, an audio packet simultaneously to both a first audio playback device and a second audio playback device; and
feeding back respective response messages to the audio data sending device by the first audio playback device and the second audio playback device in sequence in response to receiving the audio packet for playback.

In order to solve the aforesaid problem, the present disclosure adopts the following technical solution: a system for transmitting audio data wirelessly, which includes: an audio data sending device, a first audio playback device, and a second audio playback device, where the system for transmitting audio data wirelessly is configured to perform, in each cycle of at least one cycle, following operations of:
sending, by an audio data sending device, an audio packet simultaneously to both a first audio playback device and a second audio playback device; and
feeding back respective response messages to the audio data sending device by the first audio playback device and the second audio playback device in sequence in response to receiving the audio packet for playback.

Compared with the prior art, the beneficial effect of the present disclosure lies in the elimination of establishment of wireless communication between the first audio playback device and the second audio playback device, and the connection manner of the system for transmitting audio data is rather simple. Furthermore, since there is no need to transmit data between the first audio playback device and the second audio playback device, the time consumed in data transmission is shortened, thereby lowering a signal latency for the whole system. In addition, the first audio playback device and the second audio playback device are synchronized in a rather simple manner, that is, they receive the audio packet simultaneously according to the preset timing and play simultaneously the respective contents from the received audio packet which are respectively intended for first audio playback device and the second audio playback device. Moreover, the first audio playback device and second audio playback device can be controlled in a rather simple and flexible manner.

### BRIEF DESCRIPTION OF THE DRAWINGS

FIG. 1 is a schematic structural diagram of a system for transmitting audio data wirelessly according to an embodiment of the present disclosure;
FIG. 2 is a schematic flowchart of a method of transmitting audio data wirelessly according to an embodiment of the present disclosure;
FIG. 3 is a time sequence chart of the method shown in FIG. 2; and
FIG. 4 is another time sequence chart of the method shown in FIG. 2.

### DETAILED DESCRIPTION

In the present disclosure, it should be understood that terms such as "include" or "have" are intended to indicate the existence of characteristics, figures, steps, actions, components, parts disclosed by the specification or any combination thereof, without excluding the existence of one or more other characteristics, figures, steps, actions, components, parts or any combination thereof.

Furthermore, it should be noted that, in the case of no conflict, the embodiments of the present disclosure and features of the embodiments may be combined with each other in any manner. The present disclosure will be described in detail below with reference to the accompanying drawings and embodiments.

The present disclosure will be further described in detail below in conjunction with embodiments shown by the accompanying drawings.

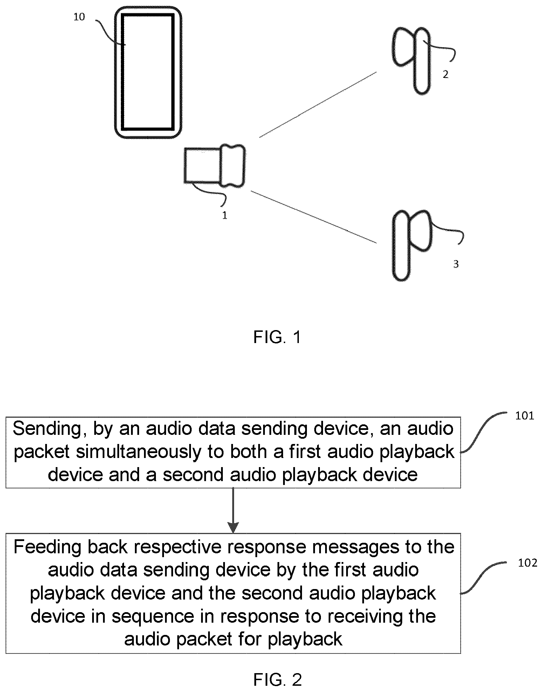

Referring to FIG. 1, the system for transmitting audio data wirelessly according to the present disclosure includes an audio data sending device 1, a first audio playback device 2, and a second audio playback device 3. The audio data sending device 1 may, for example, be a wireless adapter (e.g., a Bluetooth adapter). The wireless adapter is provided in an audio signal source 10 such as a cell phone, a personal computer and a tablet computer, and is for example connected to the audio signal source as a peripheral device via a USB interface, thereby enabling the wireless communication of the audio signal source with the first audio playback device 2 and the second audio playback device 3. The first audio playback device 2 and the second audio playback device 3 may, for example, be a left earbud and a right earbud, respectively. The wireless adapter is configured to receive an audio packet from the audio signal source 10 such as a cell phone and to send the audio packet to the left earbud and the right earbud. The first audio playback device 2 and the second audio playback device 3 may also, for example, be left and right speakers of a stereo system, respectively.

Referring to FIG. 2, the present disclosure adopts the following technical solution that is a method of transmitting audio data wirelessly, which includes following steps in each cycle of at least one cycle.

Step 101: an audio data sending device sends an audio packet simultaneously to both a first audio playback device and a second audio playback device.

Step 102: the first audio playback device and the second audio playback device feed back respective response messages to the audio data sending device in sequence in response to receiving the audio packet for playback.

Thus, there is no need to establish wireless communication between the first audio playback device and the second audio playback device, and the connection manner of the system for transmitting audio method is rather simple. Furthermore, since there is no need to transmit data between the first audio playback device and the second audio playback device, the time consumed in data transmission is shortened, thereby lowering a signal latency for the whole system. In addition, the first audio playback device and the second audio playback device are synchronized in a rather simple manner, that is, they receive the audio packet simultaneously according to the preset timing and play simultaneously the respective contents from the received audio packet which are respectively intended for the first audio playback device and the second audio playback device. Moreover, the first audio playback device and second audio playback device can be controlled in a rather simple and flexible manner.

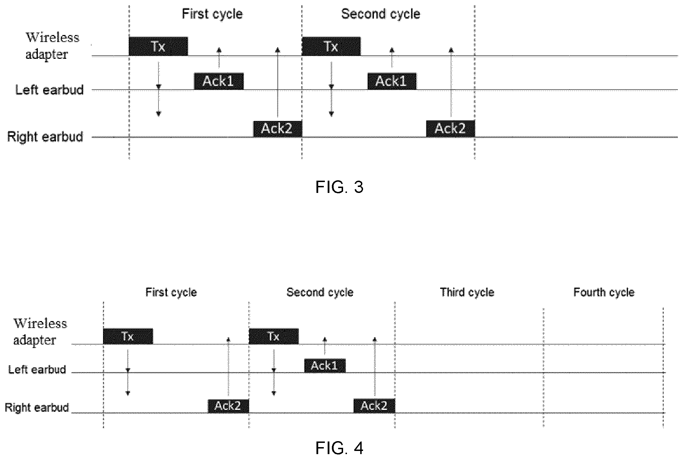

Referring to FIG. 3, in the first cycle (e.g., slot), the wireless adapter may send a first audio packet Tx to both the left earbud and the right earbud simultaneously. Then, the left earbud and the right earbud parse the audio packet simultaneously and play the respective contents from the audio packet which are respectively intended for the left earbud and the right earbud. Afterwards, the left earbud sends a response message Ack1 to the wireless adapter, and then the right earbud sends a response message Ack2 to the wireless adapter. The transmission process of a second audio packet Tx to the left and right earbuds and the sending of response messages from the left and right earbuds in the subsequent second cycle is the same as in the first cycle, and so forth.

In some embodiments, the audio data sending device includes a wireless adapter configured to enable an audio signal source configured with the audio data sending device to wirelessly communicate with the first audio playback device and second audio playback device.

In some embodiments, the audio signal source includes: a personal computer (PC), a cell phone, or a tablet computer.

Of course, functions of the wireless adapter may also be integrated into the audio signal source such as a PC, cell phone or tablet.

In some embodiments, the first audio playback device and the second audio playback device are wireless earbuds of a binaural wireless headset, respectively.

Each wireless earbud acquires the audio packet directly from the audio data sending device, and then parses the audio packet for playback.

In some embodiments, the audio packet sent by the audio data sending device includes respective audio data to be played by the first audio playback device and the second audio playback device, and respective configuration information for the first audio playback device and the second audio playback device.

The configuration information for the first audio playback device may, for example, be encoding information of the audio data, audio synchronization information, frequency hopping information of the wireless channel as adopted, interaction information for the first audio playback device sent from the second audio playback device, and the like.

The configuration information for the second audio playback device may, for example, be encoding information of the audio data, audio synchronization information, frequency hopping information of the wireless channel as adopted, interaction information for the second audio playback device sent from the first audio playback device, and the like.

In some embodiments, the response message fed back by the first audio playback device includes at least one selected from a receipt acknowledgement for the audio packet, control data and microphone data, and the control data may, for example, be quality information (signal intensity, packet loss rate) of the wireless channel, and interaction information for the second audio playback device.

In some embodiments, the response message fed back by the second audio playback device includes at least one selected from a receipt acknowledgement for the audio packet, control data and microphone data, and the control data may, for example, be quality information (signal intensity, packet loss rate) of the wireless channel, and interaction information for the first audio playback device.

The speech of the user may be captured by a microphone provided on the first audio playback device or the second audio playback device, and then the microphone data is sent to an electronic device such as a personal computer.

It is possible to provide one microphone or microphone array on either the first audio playback device or the second audio playback device, or provide the microphone or microphone array on both audio playback devices.

In some embodiments, the control data sent from the first audio playback device to the audio data sending device includes interaction information for the second audio playback device, and the interaction information is included in at least one audio packet sent by the audio data sending device after receiving the interaction information.

In some embodiments, the control data sent from the second audio playback device to the audio data sending device includes interaction information for the first audio playback device, and the interaction information is included in at least one audio packet sent by the audio data sending device after receiving the interaction information.

For example, when the user initiates a certain control operation for the first audio playback device on the second audio playback device, the interaction information corresponding to this control operation is included in the response message fed back to the audio data sending device by the second audio playback device in the current cycle. Then, in the next cycle, the audio packet sent by the audio data sending device may include this interaction information, such that the first audio playback device receives the interaction information in said next cycle.

Of course, the audio data sending device may alternatively add the interaction information into the audio packet in the second cycle after receiving the interaction information.

In some embodiments, a super-cycle is formed by a preset number of cycles including the at least one cycle, and the method further includes: sending, by the audio data sending device, the audio packet simultaneously to both the first audio playback device and the second audio playback device starting from the first cycle in the super-cycle, and in response to failing to receive at least one of the respective response messages from the first and second audio playback devices within the first cycle, resending the same audio packet simultaneously to both the first audio playback device and the second audio playback device starting from the second to the last cycles of the super-cycle until respective response messages are received from both the first audio playback device and the second audio playback device, wherein no further audio packet is sent by the audio data sending device in remaining cycles of the super-cycle following the cycle in which the respective response messages are received from both the first audio playback device and the second audio playback device.

For example, the audio data sending device sends an audio packet to the first audio playback device and the second audio playback device in the first cycle. If the audio data sending device fails to receive at least one of the respective responses from the first audio playback device and the second audio playback device in the first cycle, said audio packet is resent in the second cycle, and so forth up to the fourth cycle, until the respective responses for the resent audio packet are received from both the first audio playback device and the second audio playback device. For example, the audio packet is discarded if at least one of the respective responses is not received from the first audio playback device or the second audio playback device up to the fourth cycle.

For example, if the audio data sending device receives the respective responses from both the first audio playback device and the second audio playback device in the second cycle, the audio data sending device sends no audio packet up to the fourth cycle.

Specifically, the wireless adapter succeeds in communicating with the left earbud and the right earbud in the second cycle as shown in FIG. 4, and thus the wireless adapter does not communicate with the left and right earbuds in the subsequent two cycles, i.e., the third and fourth cycles. The wireless adapter restarts communication with the left and right earbuds from the fifth cycle according to the rule described above.

According to this embodiment, the audio packet has been compressed before sending, and there is a certain amount of idle period for the audio data sending device, which facilitates power consumption reduction.

In the embodiment as shown in FIG. 3, the audio data sending device sends an audio packet in each cycle.

Based on the same inventive concept as the aforesaid embodiments, embodiments of the present disclosure provide a system for transmitting audio data wirelessly, which includes an audio data sending device 1, a first audio playback device 2, and a second audio playback device 3, referring to FIG. 1. The system for transmitting audio data is configured to perform following operations in each cycle of at least one cycle.

The audio data sending device 1 sends an audio packet simultaneously to both the first audio playback device 2 and the second audio playback device 3.

The first audio playback device 2 and the second audio playback device 3 feed back respective response messages to the audio data sending device 1 in sequence, in response to receiving the audio packet for playback.

In some embodiments, the audio data sending device 1 includes a wireless adapter configured to enable an audio signal source configured with the audio data sending device 1 to wirelessly communicate with the first audio playback device 2 and second audio playback device 3.

In some embodiments, the audio signal source includes a personal computer (PC), a cell phone, or a tablet computer.

In some embodiments, the first audio playback device 2 and the second audio playback device 3 are wireless earbuds of a binaural wireless headset, respectively.

In some embodiments, the audio packet sent by the audio data sending device 1 includes respective audio data to be played by the first audio playback device 2 and the second audio playback device 3, and respective configuration information for the first audio playback device 2 and the second audio playback device 3.

In some embodiments, each of the respective response messages fed back by the first audio playback device 2 and the second audio playback device 3 includes at least one selected from a receipt acknowledgement for the audio packet, control data and microphone data.

In some embodiments, the control data sent from the first audio playback device 2 to the audio data sending device 1 includes interaction information for the second audio playback device 3, and the interaction information is contained in at least one audio packet sent by the audio data sending device 1 after receiving the interaction information.

In some embodiments, the control data sent from the second audio playback device 3 to the audio data sending device 1 includes interaction information for the first audio playback device 2, and the interaction information is contained in at least one audio packet sent by the audio data sending device 1 after receiving the interaction information.

In some embodiments, a super-cycle is formed by a preset number of cycles including the at least one cycle and the audio data sending device is further configured to: send the audio packet simultaneously to both the first audio playback device and the second audio playback device starting from the first cycle in the super-cycle, and in response to failing to receive at least one of the respective response messages from the first and second audio playback devices within the first cycle, resend the same audio packet simultaneously to both the first audio playback device and the second audio playback device starting from the second to the last cycles of the super-cycle until respective response messages are received from both the first audio playback device and the second audio playback device, wherein no further audio packet is sent by the audio data sending device in remaining cycles of the super-cycle following the cycle in which the respective response messages are received from both the first audio playback device and the second audio playback device.

The respective embodiments of the present disclosure are described in a progressive manner. The reference may be made to each other for the same or similar parts of the respective embodiments, and each embodiment focuses on the differences from other embodiments.

The protection scope of the present disclosure is not limited to the aforesaid embodiments, and obviously, one skilled in the art may make various modifications and variations to the present disclosure without departing from the scope of the present disclosure. If the modifications and variations of the present disclosure fall within the scope of the claims and their equivalents, the present disclosure is also intended to encompass such modifications and variations.

## Claims

1. A method of transmitting audio data wirelessly, **characterized by** comprising in each cycle of at least one cycle:
sending (101), by an audio data sending device, an audio packet simultaneously to both a first audio playback device and a second audio playback device; and
feeding back (102) respective response messages to the audio data sending device by the first audio playback device and the second audio playback device in sequence in response to receiving the audio packet for playback.

2. The method according to claim 1, wherein the audio data sending device comprises a wireless adapter configured to enable an audio signal source configured with the audio data sending device to wirelessly communicate with the first audio playback device and second audio playback device.

3. The method according to claim 2, wherein the audio signal source comprises a personal computer, a cell phone, or a tablet computer.

4. The method according to claim 1, wherein the first audio playback device and the second audio playback device are wireless earbuds of a binaural wireless headset, respectively.

5. The method according to claim 1, wherein the audio packet sent by the audio data sending device comprises respective audio data to be played by the first audio playback device and the second audio playback device, and respective configuration information for the first audio playback device and the second audio playback device.

6. The method according to claim 1, wherein the response message fed back by the first audio playback device comprises at least one selected from a receipt acknowledgement for the received audio packet, control data and microphone data.

7. The method according to claim 1, wherein the response message fed back by the second audio playback device comprises at least one selected from a receipt acknowledgement for the received audio packet, control data and microphone data.

8. The method according to claim 1, wherein a super-cycle is formed by a preset number of cycles including the at least one cycle, and the method further comprises:
sending, by the audio data sending device, the audio packet simultaneously to both the first audio playback device and the second audio playback device starting from the first cycle in the super-cycle, and in response to failing to receive at least one of the respective response messages from the first and second audio playback devices within the first cycle, resending the same audio packet simultaneously to both the first audio playback device and the second audio playback device starting from the second to the last cycles of the super-cycle until respective response messages are received from both the first audio playback device and the second audio playback device;
wherein no further audio packet is sent by the audio data sending device in remaining cycles of the super-cycle following the cycle in which the respective response messages are received from both the first audio playback device and the second audio playback device.

9. The method according to claim 6, wherein the control data comprises interaction information for the second audio playback device, and the interaction information is contained in at least one audio packet sent by the audio data sending device after receiving the interaction information.

10. The method according to claim 7, wherein the control data comprises interaction information for the first audio playback device, and the interaction information is contained in at least one audio packet sent by the audio data sending device after receiving the interaction information.

11. A system for transmitting audio data wirelessly, **characterized by** comprising an audio data sending device (1), a first audio playback device (2), and a second audio playback device (3), wherein the system is configured to perform, in each cycle of at least one cycle, operations of:
sending, by an audio data sending device (1), an audio packet simultaneously to both a first audio playback device (2) and a second audio playback device (3); and
feeding back respective response messages to the audio data sending device (1) by the first audio playback device (2) and the second audio playback (3) device in sequence in response to receiving the audio packet for playback.

12. The system according to claim 11, wherein the audio data sending device (1) comprises a wireless adapter configured to enable an audio signal source (10) configured with the audio data sending device (1) to wirelessly communicate with the first audio playback device and second audio playback device.

13. The system according to claim 11, wherein the first audio playback device (2) and the second audio playback device (3) are wireless earbuds of a binaural wireless headset, respectively.

14. The system according to claim 11, wherein the audio packet sent by the audio data sending device (1) comprises respective audio data to be played by the first audio playback device (2) and the second audio playback device (3), and respective configuration information for the first audio playback device (2) and the second audio playback device (3).

15. The system according to claim 11, wherein a super-cycle is formed by a preset number of cycles including the at least one cycle and the audio data sending device (1) is further configured to: send the audio packet simultaneously to both the first audio playback device (2) and the second audio playback device (3) starting from the first cycle in the super-cycle, and in response to failing to receive at least one of the respective response messages from the first and second audio playback devices (2, 3) within the first cycle, resend the same audio packet simultaneously to both the first audio playback device (2) and the second audio playback device (3) starting from the second to the last cycles of the super-cycle until respective response messages are received from both the first audio playback device (2) and the second audio playback device (3);
wherein no further audio packet is sent by the audio data sending device (1) in remaining cycles of the super-cycle following the cycle in which the respective response messages are received from both the first audio playback device (1) and the second audio playback device (2).
